# EUROPÄISCHE PATENTANMELDUNG

(11) **EP 1 920 996 A1**
(43) Veröffentlichungstag der Anmeldung: **14.05.2008**
(21) Anmeldenummer: 07021165.1
(22) Anmeldetag: 30.10.2007
(51) Int. Cl.: B62D 21/15, B62D 25/08

(54) **Vorderbau für ein Kraftfahrzeug**

(30) Priorität: 07.11.2006 DE 102006052383
(71) Anmelder: GM Global Technology Operations, Inc., Detroit, MI 48265-3000 (US)
(72) Erfinder: Böttcher, Curd-Sigmund, 65343 Eltville (DE); Gloger, Stefan, Dr, 64367 Mühltal (DE); Schick, Alexander, 65620 Waldbrunn (DE)
(74) Vertreter: Daniel, Ulrich W.P.

(57) **Zusammenfassung**

Ein Vorderbau (2) für ein Kraftfahrzeug hat eine Koppeleinrichtung (5), welche eine über eine Radausnehmung (3) geführte Strebe (4) mit übrigen Bereichen eines Rahmens (11) und eines Hilfsrahmens (6) verbindet. Hierfür hat die Koppeleinrichtung (5) ein als im Wesentlichen ebenes Blechteil ausgebildetes Schubelement (9) und ein kastenförmiges Querprofil (15). Weiterhin sind an die Koppeleinrichtung (5) ein Stoßfänger (8) des Kraftfahrzeuges und ein Frontelement (7) angebunden.

## Beschreibung

Die Erfindung betrifft einen Vorderbau für ein Kraftfahrzeug mit einem Rahmen und mit einem mit dem Rahmen verbundenen Hilfsrahmen, mit einer über eine Radausnehmung geführten Strebe und mit einer Koppeleinrichtung zur Verbindung des Rahmens mit dem Hilfsrahmen und der über die Radausnehmung geführten Strebe.

Solche Vorderbauten werden bei heutigen Kraftfahrzeugen häufig eingesetzt und sind aus der Praxis bekannt. Die Koppeleinrichtung der bekannten Vorderbauten ist wesentlich für die Verbindung von strukturrelevanten Bauteilen des Rahmens, der über die Radausnehmung geführten Strebe auf jeder Seite des Vorderbaus und zur Anbindung des Hilfsrahmens. Die auf beiden Seiten des Vorderbaus angeordneten Koppeleinrichtungen müssen daher für fahrdynamische Eigenschaften des Kraftfahrzeuges möglichst steif ausgebildet sein.

Der Erfindung liegt das Problem zugrunde, einen Vorderbau der eingangs genannten Art so weiterzubilden, dass er eine möglichst hohe Steifigkeit der Verbindungen der strukturrelevanten Bauteile aufweist und möglichst einfach herstellbar ist.

Dieses Problem wird erfindungsgemäß dadurch gelöst, dass die Koppeleinrichtung ein ebenes Schubelement hat und dass das Schubelement mit weiteren Bauteilen der Koppeleinrichtung ein den Rahmen mit einer zum Hilfsrahmen führenden Stütze verbindendes Kastenprofil bildet.

Durch diese Gestaltung bildet das Schubelement ein integrales Bauteil der Koppeleinrichtung, welches die strukturrelevanten Bauteile des erfindungsgemäßen Vorderbaus unmittelbar miteinander verbindet. Damit werden durch Verbindungen zwischen einzelnen Bauteilen entstehende Steifigkeitsverluste und Kerbwirkungen an den Verbindungen zuverlässig vermieden. Das mittels des Schubelementes erzeugte Kastenprofil führt zu einer besonders hohen Steifheit der Koppeleinrichtung. Daher werden die strukturrelevanten Bauteile des erfindungsgemäßen Vorderbaus mit einer hohen Steifigkeit verbunden. Da die Koppeleinrichtung zudem wenige Bauteile aufweist, ist sie besonders kostengünstig zu fertigen. Vorzugsweise ist das Kastenprofil geschlossen und trägt damit zur weiteren Erhöhung der Stabilität der Koppeleinrichtung bei.

Die Anbindung der über die Radausnehmung geführten Strebe mit weiteren Bauteilen des Rahmens weist gemäß einer anderen vorteilhaften Weiterbildung der Erfindung eine besonders hohe Stabilität auf, wenn das Schubelement die über die Radausnehmung geführte Strebe mit dem Rahmen verbindet.

Der erfindungsgemäße Vorderbau weist eine besonders geringe Anzahl an Bauteilen auf, wenn das Schubelement quer zur Fahrtrichtung des Kraftfahrzeuges angeordnet ist und das in Fahrtrichtung weisende Ende der über die Radausnehmung geführten Strebe abschießt. Hierdurch liegt das Schubelement in der optimalen Position für die Übertragung einer Schubbelastung.

Zur weiteren Verringerung der Anzahl der Bauteile des erfindungsgemäßen Vorderbaus trägt es bei, wenn das Schubelement ein entgegen der Fahrtrichtung weisendes Ende der Stütze für den Hilfsrahmen abschließt.

Zur weiteren Erhöhung der Stabilität der Koppeleinrichtung trägt es gemäß einer anderen vorteilhaften Weiterbildung der Erfindung bei, wenn die Koppeleinrichtung ein auf dem Schubelement stehendes kastenförmiges Stützprofil und ein quer zu der Stütze angeordnetes und ebenfalls auf dem Schubelement stehendes kastenförmiges Querprofil aufweist und wenn das Stützprofil und das Querprofil miteinander verbunden oder einstückig miteinander gefertigt sind.

Ein besonders steifes Kastenprofil zur Anbindung des Hilfsrahmens lässt sich gemäß einer anderen vorteilhaften Weiterbildung der Erfindung einfach erzeugen, wenn die Stütze an ihrer dem Schubelement abgewandten Seite ein Schließelement aufweist.

Zur weiteren Verringerung von Bauteilen des erfindungsgemäßen Vorderbaus trägt es bei, wenn das Schließelement einen Flansch zur Anbindung eines Stoßfängers hat. Selbstverständlich kann zwischen dem Schließelement und dem Stoßfänger zusätzlich eine Crashbox angeordnet sein.

Die Fertigung der Koppeleinrichtung gestaltet sich gemäß einer anderen vorteilhaften Weiterbildung der Erfindung besonders kostengünstig, wenn zwischen dem Schubelement und dem Schließelement angeordnete Wandungen der Stütze von einem U-förmigen Stützteil gebildet sind und wenn das U-förmige Stützteil jeweils Abwinklungen zur Verbindung mit dem Schubelement und dem Schließelement aufweist. Ein weiterer Vorteil dieser Gestaltung besteht darin, dass hierdurch die Wandstärken des Schubelementes und des Schließelementes unabhängig von der Wandstärke des U-förmigen Stützteils frei gewählt werden können. Damit lässt sich die Koppeleinrichtung auf hohe Steifheit und geringes Gewicht optimal auslegen.

Zur weiteren Verringerung der Anzahl der Bauteile des erfindungsgemäßen Vorderbaus trägt es bei, wenn die Koppeleinrichtung einen zu einem den Vorderbau begrenzenden Frontelement führenden Ausleger hat.

Zur weiteren Erhöhung der Steifigkeit des erfindungsgemäßen Vorderbaus trägt es bei, wenn der Ausleger ein an dem Schließelement angeflanschtes und kastenförmiges Auslegerprofil hat und wenn das Auslegerprofil bis zu dem Stützprofil geführt ist.

Zur weiteren Verringerung der Fertigungskosten des erfindungsgemäßen Vorderbaus trägt es bei, wenn das Schubelement als im Wesentlichen ebenes Blechteil gefertigt ist und eine Abwinklung oder Verprägung zu seiner Versteifung hat. Weiterhin lassen sich hierdurch besonders hohe Schubkräfte zwischen den einzelnen an dem Schubelement angebundenen Bauteilen übertragen. Vorzugsweise ist das Schließelement im Bereich des Flansches zur Anbindung des Stoßfängers und im Bereich der Stütze für den Hilfsrahmen ebenfalls eben gestaltet.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Die Zeichnung zeigt in
- Fig. 1: schematisch ein Kraftfahrzeug mit einem erfindungsgemäßen Vorderbau
- Fig. 2: eine stark vergrößerte Darstellung eines Teilbereichs des erfindungsgemäßen Vorderbaus aus Figur 1,
- Fig. 3: eine Schnittdarstellung durch ein Querprofil aus Figur 2 entlang der Linie III - III,
- Fig. 4: eine Schnittdarstellung durch ein Stützprofil aus Figur 2 entlang der Linie IV - IV,
- Fig. 5: eine Schnittdarstellung durch ein Auslegerprofil aus Figur 2 entlang der Linie V - V,

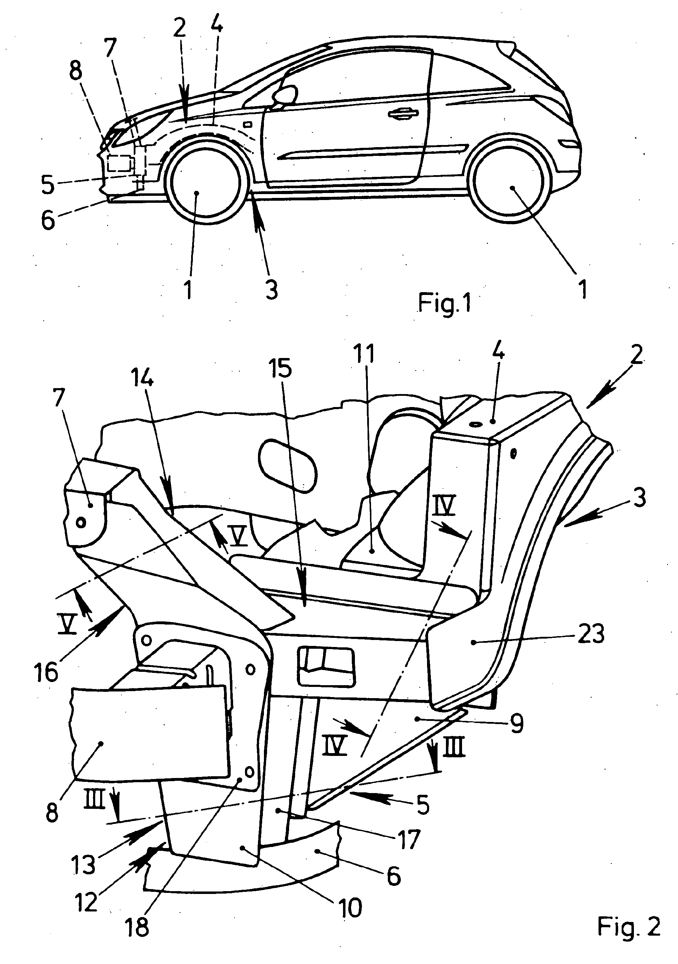

Figur 1 zeigt ein Kraftfahrzeug mit Rädern 1 und mit einem Vorderbau 2. Der Vorderbau 2 ist in Figur 1 schematisch dargestellt und hat eine über eine Radausnehmung 3 geführte und in Fahrtrichtung weisende Strebe 4. Das in Fahrtrichtung weisende Ende der Strebe 4 ist mit einer Koppeleinrichtung 5 verbunden. Die Koppeleinrichtung 5 haltert ein vorderes Ende eines Hilfsrahmens 6. Der Hilfsrahmen 6 ist vorzugsweise ringförmig gestaltet und haltert eine nicht dargestellte Brennkraftmaschine des Kraftfahrzeuges. Weiterhin haltert die Koppeleinrichtung 5 ein Frontelement 7 des Vorderbaus 2 und einen Stoßfänger 8.

Figur 2 zeigt in einer perspektivischen Darstellung die auf einer Seite des Kraftfahrzeuges aus Figur 1 angeordnete Koppeleinrichtung 5 mit angrenzenden Bereichen des Vorderbaus 2. Die Koppeleinrichtung 5 hat ein das freie Ende der über die Radausnehmung 3 geführten Strebe 4 verschließendes und bis zu dem Hilfsrahmen 6 geführtes Schubelement 9 und ein den Stoßfänger 8 halterndes, bis zu dem Hilfsrahmen 6 geführtes Schließelement 10. Das Schubelement 9 verbindet die über die Radausnehmung 3 geführte Strebe 4 mit übrigen Bereichen eines Rahmens 11 des Kraftfahrzeuges. Die Koppeleinrichtung 5 hat eine Stütze 12 mit einem kastenförmigen Stützprofil 13 zur Anbindung des Hilfsrahmens 6 und einen Ausleger 14 zur Anbindung des Frontelementes 7. Weiterhin hat die Koppeleinrichtung 5 ein ebenfalls kastenförmiges Querprofil 15, welches von der über die Radausnehmung 3 geführte Strebe 4 bis zu dem Stützprofil 13 geführt ist. Ein ebenfalls kastenförmiges Auslegerprofil 16 des Auslegers 14 ist bis zu dem Frontelement 7 geführt. Das Schubelement 9 und das Schließelement 10 sind über ein U-förmige Stützteil 17 der Stütze 12 miteinander verbunden und auf Abstand zueinander gehalten. Damit erzeugen das Schubelement 9, das Schließelement 10 und das Stützteil 17 das kastenförmige Stützprofil 13. Die Anbindung des Stoßfängers 8 an der Koppeleinrichtung 5 erfolgt über einen Flansch 18 an dem Schließelement 10.

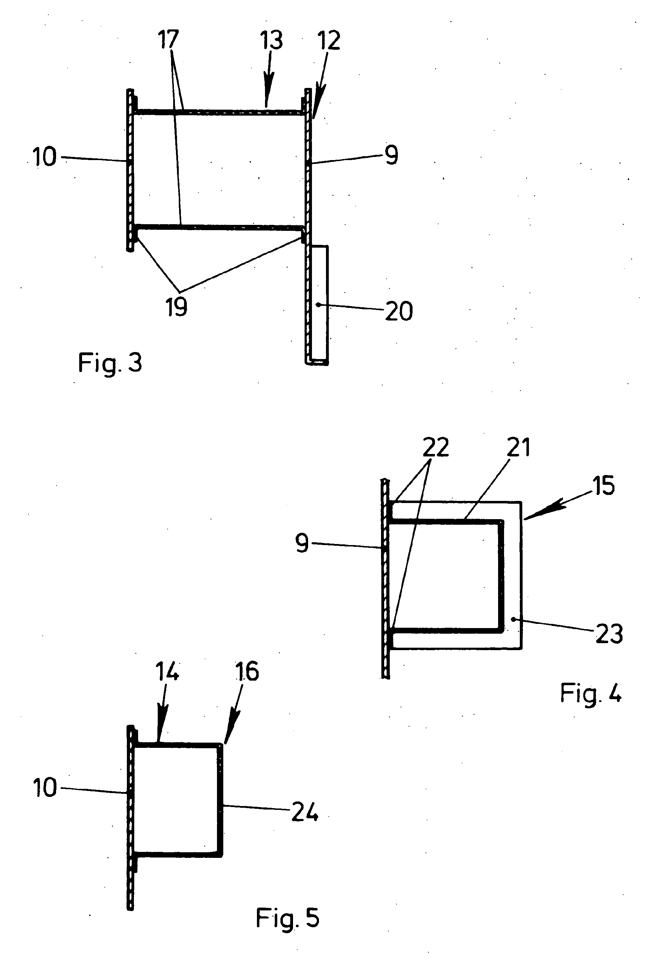

Wie Figur 3 in einer Schnittdarstellung durch die Stütze 12 aus Figur 2 entlang der Linie III - III zeigt, hat das U-förmige Stützteil 17 jeweils Abwinklungen 19 zur Verbindung mit dem Schubelement 9 und dem Schließelement 10. Das Schubelement 9 weist zudem eine Abwinklung 20 zu seiner Versteifung auf. In der Schnittdarstellung sind von dem U-förmigen Stützteil 17 nur Schenkel dargestellt. Eine die Schenkel verbindende Basis liegt hinter der Zeichenebene nahe an dem in Figur 2 dargestellten Hilfsrahmen 6.

Figur 4 zeigt das Querprofil 15 aus Figur 2 in einer Schnittdarstellung entlang der Linie IV - IV aus Figur 2. Hierbei ist zu erkennen, dass das Querprofil 15 ebenfalls ein U-förmiges Blechteil 21 aufweist, welches über Abwinklungen 22 mit dem Schubelement 9 verbunden ist. Das Ende des Querprofils 15 wird von einem Seitenblech 23 der in Figur 2 dargestellten, über die Radausnehmung 3 geführten Strebe 4 abgedeckt.

Figur 5 zeigt in einer Schnittdarstellung durch den Ausleger 14 aus Figur 2 entlang der Linie V - V, dass das Auslegerprofil 16 ein U-förmiges Blechteil 24 aufweist, welches mit dem Schließelement 10 verbunden ist.

### Bezugszeichenliste

- 1: Rad
- 2: Vorderbau
- 3: Radausnehmung
- 4: Strebe
- 5: Koppeleinrichtung
- 6: Hilfsrahmen
- 7: Frontelement
- 8: Stoßfänger
- 9: Schubelement
- 10: Schließelement
- 11: Rahmen
- 12: Stütze
- 13: Stützprofil
- 14: Ausleger
- 15: Querprofil
- 16: Auslegerprofil
- 17: Stützteil
- 18: Flansch
- 19, 20: Abwinklung
- 21: Blechteil
- 22: Abwinklung
- 23: Seitenblech
- 24: Blechteil

## Patentansprüche

1. Vorderbau (2) für ein Kraftfahrzeug mit einem Rahmen (11) und mit einem mit dem Rahmen (11) verbundenen Hilfsrahmen (6), mit einer über eine Radausnehmung (3) geführten Strebe (4) und mit einer Koppeleinrichtung (5) zur Verbindung des Rahmens (11) mit dem Hilfsrahmen (6) und der über die Radausnehmung (3) geführten Strebe (4), **dadurch gekennzeichnet, dass** die Koppeleinrichtung (5) ein ebenes Schubelement (9) hat und dass das Schubelement (9) mit weiteren Bauteilen der Koppeleinrichtung (5) ein den Rahmen (11) mit einer zum Hilfsrahmen (6) führenden Stütze (12) verbindendes Kastenprofil bildet.

2. Vorderbau nach Anspruch 1, **dadurch gekennzeichnet, dass** das Schubelement (9) die über die Radausnehmung (3) geführte Strebe (4) mit dem Rahmen (11) verbindet.

3. Vorderbau nach Anspruch 1 oder 2, **dadurch gekennzeichnet, dass** das Schubelement (9) quer zur Fahrtrichtung des Kraftfahrzeuges angeordnet ist und das in Fahrtrichtung weisende Ende der über die Radausnehmung (3) geführten Strebe (4) abschießt.

4. Vorderbau nach einem der vorhergehenden Ansprüche, **dadurch gekennzeichnet, dass** das Schubelement (9) ein entgegen der Fahrtrichtung weisendes Ende der Stütze (12) für den Hilfsrahmen (6) abschließt.

5. Vorderbau nach einem der vorhergehenden Ansprüche, **dadurch gekennzeichnet, dass** die Koppeleinrichtung (5) ein auf dem Schubelement (9) stehendes kastenförmiges Stützprofil (13) und ein quer zu der Stütze (12) angeordnetes und ebenfalls auf dem Schubelement (9) stehendes kastenförmiges Querprofil (15) aufweist und dass das Stützprofil (13) und das Querprofil (15) miteinander verbunden oder einstückig miteinander gefertigt sind.

6. Vorderbau nach einem der vorhergehenden Ansprüche, **dadurch gekennzeichnet, dass** die Stütze (12) an ihrer dem Schubelement (9) abgewandten Seite ein Schließelement (10) aufweist

7. Vorderbau nach Anspruch 6, **dadurch gekennzeichnet, dass** das Schließelement (10) einen Flansch (18) zur Anbindung eines Stoßfängers (8) hat.

8. Vorderbau nach einem der Ansprüche 5 bis 7, **dadurch gekennzeichnet, dass** zwischen dem Schubelement (9) und dem Schließelement (10) angeordnete Wandungen der Stütze (12) von einem U-förmigen Stützteil (17) gebildet sind und dass das U-förmige Stützteil (17) jeweils Abwinklungen (19) zur Verbindung mit dem Schubelement (9) und dem Schließelement (10) aufweist.

9. Vorderbau nach einem der vorhergehenden Ansprüche, **dadurch gekennzeichnet, dass** die Koppeleinrichtung (5) einen zu einem den Vorderbau (2) begrenzenden Frontelement (7) führenden Ausleger (14) hat.

10. Vorderbau nach Anspruch 9, **dadurch gekennzeichnet, dass** der Ausleger (14) ein an dem Schließelement (10) angeflanschtes und kastenförmiges Auslegerprofil (16) hat und dass das Auslegerprofil (16) bis zu dem Stützprofil (13) geführt ist.

11. Vorderbau nach einem der vorhergehenden Ansprüche, **dadurch gekennzeichnet, dass** das Schubelement (9) als im Wesentlichen ebenes Blechteil gefertigt ist und eine Abwinklung (20) oder Verprägung zu seiner Versteifung hat.
